# EUROPÄISCHE PATENTSCHRIFT

(11) **EP 0 885 250 B1**
(45) Veröffentlichungstag und Bekanntmachung des Hinweises auf die Patenterteilung: **10.05.2000**
(21) Anmeldenummer: 97908187.4
(22) Anmeldetag: 06.03.1997
(51) Int. Cl.: C08F 220/58, C08F 220/38, C08F 2/20, C09D 133/24, D21H 17/34

(54) **WASSERLÖSLICHE, VERNETZBARE COPOLYMERISATE**
WATER-SOLUBLE CROSS-LINKABLE COPOLYMERS
COPOLYMERES RETICULABLES HYDROSOLUBLES

(30) Priorität: 07.03.1996 DE 19608910
(43) Veröffentlichungstag der Anmeldung: 23.12.1998
(73) Patentinhaber: Wacker-Chemie GmbH, 81737 München (DE)
(72) Erfinder: KOHLHAMMER, Klaus, D-84533 Marktl (DE); KOEGLER, Gerhard, D-84508 Hirten (DE); BALL, Peter, D-84547 Emmerting (DE); ROCKINGER, Monika, 84359 Simbach/Inn (DE); DOBLER, Walter, D-84367 Tann (DE)
(74) Vertreter: Schuderer, Michael, Dr.
(86) Internationale Anmeldenummer: EP9701137
(87) Internationale Veröffentlichungsnummer: WO9732911

(56) Entgegenhaltungen:
- EP-A- 0 029 970
- FR-A- 2 003 769
- GB-A- 2 099 833
- US-A- 4 617 321
- US-A- 4 736 005

## Beschreibung

Die Erfindung betrifft wasserlösliche, vernetzbare Copolymerisate, Verfahren zu deren Herstellung sowie deren Verwendung.

Wasserlösliche Polymere mit ionischen Gruppen, sogenannte Polyelektrolyte, sind seit langem bekannt. Bei diesen Substanzen handelt es sich um Polymere, bei denen ionische Gruppen, wie z. B. Carboxylat- oder Sulfonatgruppen, über eine chemische Bindung fest mit dem Polymerrückgrat verbunden sind. Daraus ergeben sich in der Regel gute Wasserlöslichkeiten sowie ganz bestimmte rheologische Eigenschaften, im allgemeinen eine hohe Viskosität in wäßrigem Medium.

Hergestellt werden diese Polyelektrolyte durch radikalische Polymerisation von wasserlöslichen, ethylenisch ungesättigten Verbindungen, die ionische Gruppen beinhalten. Beispiele dafür sind: Acrylsäure, N-Methylolacrylamid, Acrylamido-2-methlypropansulfonsäure (AMPS), Styrolsulfonsäure. Es resultieren dabei sehr hochmolekulare Polymerisate deren wäßrige Lösungen eine hohe Viskosität aufweisen.

Die EP-B 94898 (US-A 4736005) beschreibt die Herstellung von sehr hochmolekularen (MG > 1,000,000) Terpolymeren aus 30 bis 95 % Dimethylacrylamid (DMA), 0.1 bis 10 % N-Methylolacrylamid (NMA) und 4 bis 50 % Acrylamidomethylpropansulfonat (AMPS) und deren Verwendung als rheologische Additive in der Erdölförderung.

Die DE-A 2618898 (US-A 3965032) betrifft kolloidale Dispersionen, welche einen in Wasser löslichen oder in Wasser dispergierbaren Mischpolymerisat-Polyelektrolyten mit nichtionischen hydrophoben Einheiten, beispielsweise Methylmethacrylat, und ionischen, hydrophilen Einheiten, beispielsweise AMPS, enthalten, dessen Herstellung in Lösungspolymerisation in einem mit Wasser mischbaren Lösungsmittel erfolgt. Konkret werden Mischpolymerisate beschrieben, welche die hydrophobe Komponente in einem Überschuß von 2 : 1 bis 6 : 1 enthalten.

In der EP-A 629650 (US-A 5278222) und der EP-A 671435 sind wasserlösliche und wasserunlösliche Polymerisate aus hydrophoben Monomereinheiten und 15 bis 80 Gew% bzw. 30 bis 50 Gew% sulfonatgruppenhaltigen Monomeren als Sprühhilfsmittel bei der Sprühtrocknung von wäßrigen Polymerisatdispersionen beschrieben.

Wasserlösliche Polymerisate mit hohen Anteilen an vernetzbaren, wasserlöslichen Monomereinheiten wie N-Methylolacrylamid (NMA) wären prinzipiell in Form deren wäßrigen Lösungen als Bindemittel für Beschichtungsmittel oder Klebemittel interessant. Eine weitere denkbare Anwendung wäre die als Dispergiermittel in wäßrigen Polymerisatdispersionen. Wasserlösliche Polymere mit hohem NMA-Gehalt haben die Tendenz zu hohen Molekulargewichten, mit entsprechend hoher Viskosität der wäßrigen Lösung. Wasserlösliche Acrylverbindungen wie Acrylsäure oder das als Vernetzer gebräuchliche N-Methylolacrylamid neigen nämlich zu sehr hohen Polymerisationsgraden, was eine weit verbreitete Verwendung aufgrund der resultierenden hohen Viskositäten stark beeinträchtigt.

Ein weiterer Nachteil von Polyelektrolyten auf der Basis wasserlöslicher Monomere besteht darin, daß solche Polyelektrolyte häufig mit einer Polymerisatdispersion unverträglich sind und sich die wäßrige Polyelektrolytlösung als Serum von der Polymerisatdispersion abtrennt.

Die EP-A 29970 beschreibt Copolymere, welche neben Acrylsäureeinheiten noch Sulfonatgruppen-haltige Comonomere und Acrylamid enthalten. Vernetzbare Copolymerisate mit N-Methylol-oder N-Alkoxymethylgruppen-haltigen Monomereinheiten werden nicht beschrieben.

Aus der FR-A 2003769 ist die Herstellung von Copolymerisaten von (Meth)acrylamid, (Meth)acrylsäure und Hydroxymethylacrylamid bekannt, welche als Schutzkolloide zur Suspensionspolymerisation von (Meth)acrylsäureestern eingesetzt werden. Niedermolekulare, vernetzbare Copolymerisate mit Sulfonatgruppen-haltigen Comonomeren und hydrophoben Comonomeren werden nicht beschrieben.

In der GB-A 2099833 wird gelehrt, monoethylenisch ungesättigte Monomere in Gegenwart eines Copolymerisats von (Meth)acrylamid und (Meth)acrylsäure oder eines Copolymerisats von (Meth)-acrylamid und ungesättigten Sulfonsäuren zu polymerisieren.

Der Erfindung lag daher die Aufgabe zugrunde, wasserlösliche und vernetzbare Polyelektrolyte zur Verfügung zu stellen, welche trotz eines überwiegenden Anteils an wasserlöslichem Comonomer relativ niedere Molekulargewichte aufweisen, und welche bei Verwendung als Zusatz zu wäßrigen Polymerisatdispersionen hohe Affinität zur dispergierten Phase und oberflächenaktive Eigenschaften zeigen.

Überraschenderweise wurde gefunden, daß durch die Copolymerisation von N-Methylolacrylamid mit Sulfonsäure- oder Sulfonatgruppenhaltigen Acrylverbindungen deutlich niedrigere Molekulargewichte erzielt werden können. Außerdem wurde überraschend gefunden, daß bereits durch Copolymerisation von nur geringen Mengen an hydrophoben Comonomeren deutlich niedrigere Oberflächenspannungen und niedrigere Viskositäten resultieren.

Gegenstand der Erfindung sind wasserlösliche, vernetzbare Copolymerisate mit einem mittlerem Molekulargewicht von ≤ 500000 enthaltend
a) 20 bis 95 Gew% Sulfonsäure- oder Sulfonatgruppenhaltige Monomereinheiten,
b) 4 bis 80 Gew% N-Methylol- oder N-Alkoxymethylgruppenhaltige Monomereinheiten,
c) 0.1 bis 20 Gew% hydrophobe Monomereinheiten aus der Gruppe der wasserunlöslichen, ethylenisch ungesättigten Verbindungen und der hydrophoben Endgruppen von Initiatorresten oder Reglermolekülen,

wobei die Anteile in Gew% auf das Gesamtgewicht des Copolymerisats bezogen sind, und
wobei der Anteil an Sulfonsäure-/Sulfonatgruppenhaltigen Monomereinheiten gegebenenfalls zu bis zu 50 Gew%, bezogen auf den Gewichtsanteil der Monomereinheiten a), durch Carboxylgruppenhaltige Monomereinheiten d) oder Amidgruppenhaltige Monomereinheiten e) substituiert werden kann.

Bevorzugt werden wasserlösliche, vernetzbare Copolymerisate mit einem mittlerem Molekulargewicht von ≤ 500000 enthaltend
a) 30 bis 87 Gew% Sulfonsäure- oder Sulfonatgruppenhaltige Monomereinheiten,
b) 12 bis 60 Gew% N-Methylol- oder N-Alkoxymethylgruppenhaltige Monomereinheiten,
c) 1 bis 10 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind.

Besonders bevorzugt werden wasserlösliche, vernetzbare Copolymerisate mit einem mittleren Molekulargewicht von ≤ 500000 enthaltend
a) 70 bis 87 Gew% Sulfonsäure- oder Sulfonatgruppenhaltige Monomereinheiten,
b) 12 bis 25 Gew% N-Methylol- oder N-Alkoxymethylgruppenhaltige Monomereinheiten,
c) 1 bis 5 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind.

Geeignete Monomereinheiten a) sind beispielsweise wasserlösliche, radikalisch polymerisierbare, ethylenisch ungesättigte Verbindungen, die Sulfonsäure- bzw. Sulfonatgruppen -SO₃M, mit M = H, Alkali-, Ammonium- oder Erdalkaliion enthalten. Bevorzugt werden 2-Acrylamido-2-methylpropansulfonsäure (AMPS), Styrolsulfonsäure, (Meth-)Acrylsäure-Sulfoalkylester, Itaconsäure-Sulfoalkylester, vorzugsweise jeweils mit C₁- bis C₆-Alkylrest, Vinylsulfonsäure und deren Ammonium-, Alkali-oder Erdalkalisalze.

Bevorzugt werden ein oder mehrere aus der Gruppe umfassend 2-Acrylamido-2-methylpropansulfonsäure (AMPS), Styrolsulfonsäure, Acrylsäuresulfopropylester, Itaconsäuresulfopropylester, Vinylsulfonsäure, und deren Ammonium-, Natrium-, Kalium- und Calciumsalze enthalten.

Geeignete Monomereinheiten b) sind beispielsweise wasserlösliche, radikalisch polymerisierbare, ethylenisch ungesättigte Verbindungen, die N-Methylolgruppen (-NH-CH₂OH) oder deren veretherte Derivate (-NH-CH₂OR mit R = C₁-C₆-Alkyl) enthalten. Bevorzugt werden N-Methylolacrylamid (NMA), N-Methylolmethacrylamid (NMMA), N-(Isobutoxymethyl)-acrylamid (IBMA), N-(Isobutoxymethyl)-methacrylamid, N-(n-Butoxymethyl)-acrylamid (NBMA).

Besonsers bevorzugt werden N-Methylolacrylamid und/oder N-(Isobutoxymethyl)-acrylamid enthalten.

Beispielsweise sind als Monomereinheiten c) ein oder mehrere aus der Gruppe umfassend Ester der Acrylsäure oder Methacrylsäure wie Methylmethacrylat mit mehr als 3 C-Atomen, Vinylaromaten wie Styrol oder Vinyltoluol, Olefine wie Ethylen oder Propylen, Vinylhalogenide wie Vinylchlorid, Vinylester von aliphatischen Carbonsäuren mit mehr als 2 C-Atomen, sowie hydrophobe Endgruppen von Initiatorresten oder Reglermolekülen mit jeweils mehr als 8 C-Atomen, enthalten.

Geeignete Monomereinheiten c) sind radikalisch (co-)polymerisierbare, ethylenisch ungesättigte Verbindungen, die bei 23°C mit weniger als 2 % Gew% in Wasser löslich sind, sowie hydrophobe Endgruppen von Initiatorresten oder Reglermolekülen mit jeweils mehr als 8 C-Atomen. Bevorzugt werden Ester der Acrylsäure oder Methacrylsäure mit mehr als 3 C-Atomen, wie Methylmethacrylat, Vinylaromaten wie Styrol oder Vinyltoluol, Olefine wie Ethylen oder Propylen, Vinylhalogenide wie Vinylchlorid, Vinylester von aliphatischen Carbonsäuren mit mehr als 2 C-Atomen. Als Endgruppe von Reglermolekülen ist der Dodecylrest von Dodecylmercaptan bevorzugt. Besonders bevorzugt werden Methylmethacrylat, Styrol, Vinylpropionat, Isopropenylacetat (1-Methylvinylacetat), Vinyllaurat, Vinylester von α-verzweigten Monocarbonsäuren mit 5 bis 10 C-Atomen wie VeoVa9^{R} oder VeoVa10^{R}.

Geeignete Carboxylgruppenhaltige Monomere d) sind wasserlösliche, radikalisch polymerisierbare, ethylenisch ungesättigte Verbindungen, die Carboxylgruppen -COOM, mit M = H, Alkali-, Ammonium- oder Erdalkaliionen, enthalten. Bevorzugt werden Acrylsäure, Methacrylsäure, Crotonsäure, Itaconsäure. Geeignete Amidgruppenhaltige Monomere e) sind wasserlösliche, radikalisch polymerisierbare, ethylenisch ungesättigte Verbindungen, die Amidgruppen -CONH₂ enthalten. Bevorzugt wird Acrylamid und Methacrylamid, besonders bevorzugt Acrylamid.

Wasserlöslich bedeutet dabei generell, daß die Löslichkeit in Wasser bei 23°C mindestens 10 Gew% beträgt. Das Molekulargewicht ist als Gewichtsmittel, bestimmt mittels Gelpermeationsverfahren (GPC) gegen Natrium-Polystyrolsulfonat-Standards, angegeben.

Bevorzugt erfolgt die Herstellung durch radikalische Polymerisation der Monomeren a), b), c), gegebenenfalls d) und e), in wäßriger Lösung bei einer Reaktionstemperatur von 40°C bis 80°C, mittels Initiierung mit wasserlöslichem Radikalbildner.

Die Herstellung der erfindungsgemäßen Copolymerisate erfolgt vorzugsweise durch radikalische Polymerisation in wäßriger Lösung bei einer Reaktionstemperatur von vorzugsweise 40°C bis 80°C. Die Polymerisation kann unter Vorlage aller oder einzelner Bestandteile des Reaktionsgemisches erfolgen, oder unter teilweiser Vorlage und Nachdosierung der oder einzelner Bestandteile des Reaktionsgemisches, oder nach dem Dosierverfahren ohne Vorlage durchgeführt werden.

Die Initiierung erfolgt mittels der gebräuchlichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium-und Kaliumpersulfat, Wasserstoffperoxid, Kalium-, Natrium- und Ammoniumperoxodiphosphat. Gegebenenfalls können die genannten radikalischen Initiatoren auch in bekannter Weise mit 0.01 bis 1.0 Gew%, bezogen auf das Gesamtgewicht der Monomeren, Reduktionsmittel kombiniert werden, wobei in diesem Fall bei niedrigeren Temperaturen polymerisiert werden kann. Geeignet sind zum Beispiel Alkali-Formaldehydsulfoxylate und Ascorbinsäure. Bei der Redoxinitiierung werden dabei vorzugsweise eine oder beide Redox-Katalysatorkomponenten während der Polymerisation dosiert.

Der für die Polymerisation gewünschte pH-Bereich, der im allgemeinen pH ≥ 2,5 beträgt, kann in bekannter Weise durch Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Vorzugsweise wird ein Teil des Gemisches der Comonomeren a), b), c), und gegebenenfalls d) und e) als wäßrige Lösung vorgelegt und die Restmenge der Comonomere a) und b) zudosiert, und die Vorlage auf Reaktionstemperatur erwärmt, und nach Erreichen der Polymerisationstemperatur der Radikalstarter und das restliche Comonomergemisch, jeweils in wäßriger Lösung, langsam zudosiert.

In einer besonders bevorzugten Ausführungsform wird ein Teil des Gemisches der Comonomeren a), b), c) und gegebenenfalls d) und e) als wäßrige Lösung vorgelegt und die Vorlage auf die Reaktionstemperatur erwärmt. Nach Erreichen der Polymerisationstemperatur wird der Radikalstarter und das restliche Comonomergemisch, jeweils in wäßriger Lösung, langsam zudosiert. Nach Dosierende wird die Polymerisation durch Erwärmen des Ansatzes auf 85°C bis 95°C vervollständigt.

In der am meisten bevorzugten Ausführungsform wird zumindest ein Teil der Sulfonatgruppenhaltigen Comonomere a), im allgemeinen 5 bis 60 Gew%, sowie ein Teil der N-Methylolfunktionellen Comonomere b), im allgemeinen 5 bis 60 Gew%, als wäßrige Lösung vorgelegt und die Restmenge der Comonomere a) und b) zudosiert.

Die Copolymerisate werden vorzugsweise in Form deren wäßrigen Lösungen verwendet. Je nach Anwendungen werden vorzugsweise Festgehalte von 15 bis 25 Gew% eingestellt. Die Copolymerisatlösungen eignen sich als Bindemittel oder Rheologiehilfsmittel für Beschichtungsmittel im Textil-, Papierund Baubereich und für Klebemittel im Textil-, Papier- und Baubereich. Beispielsweise wurde bei der Verwendung der wäßrigen Copolymerisatlösung als Imprägniermittel für Vliesstoffe eine außergewöhnlich gute Lösungsmittelfestigkeit und eine hohe Naßfestigkeit gefunden.

Ein bevorzugtes Anwendungsgebiet ist auch die Verwendung der Copolymerisatlösungen zur antistatischen Ausrüstung von Textilien, beispielsweise Teppichen oder Vliesen. Dazu können die Textilien mit der wäßrigen Lösung imprägniert werden. Eine weitere Möglichkeit zur antistatischen Ausrüstung besteht darin, die wäßrigen Copolymerisatlösungen Bindemitteldispersionen zur Textilbindung beizumischen.

Aufgrund der für Polyelektrolyte überraschend niedrigen Viskosität der wäßrigen Copolymerisatlösungen und der durch die hydrophoben Einheiten induzierten zusätzlichen oberflächenaktiven Eigenschaften eignen sich die erfindungsgemäßen Copolymerisate auch hervorragend zur Stabilisierung von wäßrigen Polymerdispersionen oder wäßrigen Polymeremulsionen.

Wäßrige Polymeremulsionen und wäßrige Polymerdispersionen sind mittels radikalischer Polymerisation von ethylenisch ungesättigten Monomeren in dem Fachmann bekannter Weise zugänglich. Beispiele für in der Polymerisation, allein oder im Gemisch, einsetzbare Monomere sind Vinylester von gesättigten C₂- bis C₁₀-Carbonsäuren wie Vinylacetat, Vinyllaurat, Versaticsäurevinylester; Ester der Methacrylsäure und Acrylsäure von aliphatischen C₁- bis C₈-Alkoholen wie Methylmethacrylat, Ethylacrylat, Butylacrylat, Ethylhexylacrylat; Olefine wie Ethylen, Propylen; Vinylaromaten wie Styrol; Vinylhalogenide wie Vinylchlorid.

Die erfindungsgemäßen Copolymerisate können dabei in Form deren wäßriger Lösung vor oder während der Polymerisation als Schutzkolloid vorgelegt oder zudosiert werden; üblicherweise in Mengen von 1 bis 15 Gew%, bezogen auf die Monomermenge. Alternativ dazu kann eine wäßrige Lösung der Copolymerisate auch nach Abschluß der Polymerisation der Polymeremulsion oder Polymerdispersion in der obengenannten Menge zugegeben werden. Eine weitere Anwendung ist die Verwendung von wäßrigen Lösungen der erfindungsgemäßen Copolymerisate als Verdüsungshilfe bei der Sprühtrocknung von Polymerdispersionen.

Die nachfolgenden Beispiele dienen zur weiteren Erläuterung der Erfindung.

### Vergleichsbeispiel 1:

### Herstellung einer ca. 16 %-igen AMPS-NMA-Polymerlösung:

Vorbereitung der Monomerdosierlösung: In einem geeigneten Dosiergefäß wurden 468 g Wasser vorgelegt und nacheinander die folgenden Stoffe gelöst: 83.1 g einer 25 %-igen NaOH-Lösung, 0.866 g Mercaptopropionsäure (MPS), 159 g 2-Acrylamido-2-methylpropan-sulfonsäure (AMPS) und 106 g einer 45 %-igen wäßrigen N-Methylolacrylamidlösung (NMA).
In einem 3 l Laborreaktor ausgerüstet mit Blattrührer, Rückflußkühler und geeigneten Dosiereinrichtungen wurden nacheinander vorgelegt: 1.24 kg deionisiertes Wasser, 54.4 g einer 25 %-igen NaOH-Lösung, 0.866 g MPS, 114 g AMPS und 55.4 g einer 45 %-igen wäßrigen NMA-Lösung. Die Vorlage wurde gerührt und auf 80°C aufgeheizt. Die Polymerisation wurde gestartet, indem eine 2.2 %-ige wäßrige Ammoniumpersulfatlösung (APS) über einen Zeitraum von 3 Stunden zudosiert wurde. 10 min nach dem Start der APS-Dosierung wurde die oben beschriebene Monomerdosierlösung innerhalb von 2 h zudosiert. Anschließend wurde die Polymerisation bei 90°C vervollständigt. Nach dem Abkühlen wurde die Lösung mit NaOH auf pH= 7 eingestellt.
Die so hergestellte, klare Lösung hatte einen Festgehalt von 15.4 %, einen pH-Wert von 7, eine Viskosität von 220 mPas (Brookfield, 20 Upm) und ein mittleres Molekulargewicht von 531000 (GPC; gegen Na-Polystyrolsulfonat-Standards), die Oberflächenspannung der 5 %-igen wäßrigen Lösung lag bei 67.5 mNm.

### Vergleichsbeispiel 2:

### Herstellung einer ca. 16 %-igen AMPS-NMA-Polymerlösung:

Vorbereitung der Monomerdosierlösung: In einem geeigneten Dosiergefäß wurden 468 g Wasser vorgelegt und nacheinander die folgenden Stoffe gelöst: 83.2 g einer 25 %-igen NaOH-Lösung, 0.866 g Mercaptopropionsäure (MPS), 184 g 2-Acrylamido-2-methylpropan-sulfonsäure (AMPS) und 70.9 g einer 45 %-igen wäßrigen N-Methylolacrylamidlösung (NMA).
In einem 3 l Laborreaktor ausgerüstet mit Blattrührer, Rückflußkühler und geeigneten Dosiereinrichtungen wurden nacheinander vorgelegt: 1.27 kg deionisiertes Wasser, 55.5 g einer 25 %-igen NaOH-Lösung, 0.866 g Mercaptopropionsäure MPS, 114 g feste 2-Acrylamido-2-methylpropansulfonsäure AMPS und 37 g einer 45 %-igen N-Methylolacrylamidlösung NMA. Die Lösung wurde gerührt und auf 80°C aufgeheizt. Die Polymerisation wurde gestartet, indem eine 2.2 %-ige Ammoniumpersulfatlösung (APS) über einen Zeitraum von 3 Stunden zudosiert wurde. 10 min nach dem Start der APS-Lösung wurde die oben beschriebene Monomerdosierlösung innerhalb von 2 h zudosiert. Anschließend wurde die Polymerisation bei 90°C vervollständigt. Nach dem Abkühlen wurde die Lösung mit NaOH auf pH = 7 eingestellt.
Die so hergestellte, klare Lösung hatte einen Festgehalt von 15.8 %, einen pH-Wert von 7, eine Viskosität von 82 mPas (Brookfield, 20 Upm) und ein mittleres Molekulargewicht von 164000 (GPC; gegen Na-Polystyrolsulfonat-Standards), die Oberflächenspannung der 5 %-igen wäßrigen Lösung lag bei 65.1 mNm.

### Beispiel 1:

### Herstellung einer ca. 16 %-igen AMPS-NMA-STY-Polymerlösung:

Vorbereitung der Monomerdosierlösung: In einem geeigneten Dosiergefäß wurden 459 g Wasser vorgelegt und nacheinander die folgenden Stoffe gelöst: 81.5 g einer 25 %-igen wäßrigen NaOH-Lösung, 0.849 g MPS, 4.18 g Styrol, 180 g AMPS und 69.5 g einer 45 %-igen NMA-Lösung.
In einem 3 l Laborreaktor ausgerüstet mit Blattrührer, Rückflußkühler und geeigneten Dosiereinrichtungen wurden nacheinander vorgelegt: 1.28 kg deionisiertes Wasser, 54.4 g einer 25 %-igen NaOH-Lösung, 0.849 g MPS, 112 g AMPS, 36.2 g einer 45 %-igen NMA-Lösung und 2.62 g Styrol. Die Lösung wurde gerührt und auf 80°C aufgeheizt. Die Polymerisation wurde gestartet, in dem eine 2.2 %-ige wäßrige APS-Lösung über einen Zeitraum von 3 Stunden zudosiert wurde. 10 min nach dem Start der APS-Dosierung wurde die oben beschriebene Monomerdosierlösung innerhalb von 2 h zudosiert. Anschließend wurde die Polymerisation bei 90°C vervollständigt. Nach dem Abkühlen wurde die Lösung mit NaOH auf pH = 7 eingestellt.

Die so hergestellte, klare Lösung hatte einen Festgehalt von 15.8 %, einen pH-Wert von 7, eine Viskosität von 48 mPas (Brookfield, 20 Upm) und ein mittleres Molekulargewicht von 450000 (GPC; gegen Na-Polystyrolsulfonat-Standards); die Oberflächenspannung der 5 %-igen wäßrigen Lösung lag bei 61.6 mNm.

### Beispiel 2:

Herstellung einer ca. 16%igen AMPS-NMA-Polymerlösung mit hydrophoben Dodecyl-Endgruppen.

Vorbereitung der Monomerdosierlösung: In einem geeigneten Dosiergefäß wurden 455 g Wasser vorgelegt und nacheinander die folgenden Stoffe gelöst: 80.9 g einer 25 %-igen wäßrigen NaOH-Lösung, 0.843 g MPS, 179 g AMPS und 68.9 g einer 45 %-igen NMA-Lösung.
Vorbereitung der Regler-Dosierlösung: In einem geeigneten Dosiergefäß wurden 5.39 Dodecylmercaptan in 48.5 g Aceton gelöst.
In einem 3 l Laborreaktor ausgerüstet mit Blattrührer, Rückflußkühler und geeigneten Dosiereinrichtungen wurden nacheinander vorgelegt: 1.21 kg deionisiertes Wasser, 53.9 g einer 25 %-igen NaOH-Lösung, 12.1 g Aceton, 0.843 g MPS, 111 g AMPS und 36.0 g einer 45 %-igen wäßrigen NMA-Lösung und 1.35 g Dodecylmercaptan. Die Lösung wurde gerührt und auf 80°C aufgeheizt. Die Polymerisation wurde gestartet, indem eine 2.2 %-ige wäßrige APS-Lösung über einen Zeitraum von 3 Stunden zudosiert wurde. 10 min nach dem Start der APS-Dosierung wurden die oben beschriebene Monomerdosierlösung sowie die Reglerdosierlösung innerhalb von 2 h zudosiert. Anschließend wurde die Polymerisation bei 90°C vervollständigt. Nach dem Abkühlen wurde die Lösung mit NaOH auf pH = 7 eingestellt.

Die so hergestellte, klare Lösung hatte einen Festgehalt von 16.3 %, einen pH-Wert von 7, eine Viskosität von 49.5 mPas (Brookfield, 20 Upm) und ein mittleres Molekulargewicht von 148000 (GPC; gegen Na-Polystyrolsulfonat-Standards); die Oberflächenspannung der 5 %-igen wäßrigen Lösung lag bei 63.9 mNm.

### Beispiel 3:

### Herstellung einer ca. 16 %-igen AMPS-NMA-STY-Polymerlösung:

Vorbereitung der Monomerdosierlösung: In einem geeigneten Dosiergefäß wurden 468 g Wasser vorgelegt und nacheinander die folgenden Stoffe gelöst: 83.1 g einer 25 %-igen wäßrigen NaOH-Lösung, 0.866 g MPS, 8.52 g Styrol, 173 g AMPS und 70.8 g einer 45 %-igen NMA-Lösung.
In einem 3 l Laborreaktor ausgerüstet mit Blattrührer, Rückflußkühler und geeigneten Dosiereinrichtungen wurden nacheinander vorgelegt: 1.27 kg deionisiertes Wasser, 55.4 g einer 25 %-igen NaOH-Lösung 0.866 g MPS, 111 g AMPS, 36.9 g einer 45 %-igen NMA-Lösung und 5.33 g Styrol. Die Lösung wurde gerührt und auf 80°C aufgeheizt. Die Polymerisation wurde gestartet, indem eine 2.2 %-ige wäßrige APS-Lösung über einen Zeitraum von 3 Stunden zudosiert wurde. 10 min nach dem Start der APS-Dosierung wird die oben beschriebene Monomerdosierlösung innerhalb von 2 h zudosiert. Anschließend wurde die Polymerisation bei 90°C vervollständigt. Nach dem Abkühlen wurde die Lösung mit NaOH auf pH = 7 eingestellt.
Die so hergestellte, klare Lösung hatte einen Festgehalt von 15.8 %, einen pH-Wert von 7, eine Viskosität von 54 mPas (Brookfield, 20 Upm) und ein mittleres Molekulargewicht von 377000 (GPC; gegen Na-Polystyrolsulfonat-Standards); die Oberflächenspannung der 5 %-igen wäßrigen Lösung lag bei 63.7 mNm.

Die Oberflächenspannung und die Viskosität der Polymerlösungen gemäß Beispiel 1 bis 3 und Vergleichsbeispiel 1 und 2 sind in Tabelle 3 zusammengestellt. Anhand der Zusammenfassung in Tabelle 3 ist deutlich zu sehen, daß die Polyelektrolyte ohne hydrophobe Gruppen (Vergleichsbeispiele 1 und 2) höhere Oberflächenspannungen und Viskositäten aufweisen als die Polyelektrolyte mit den stark hydrophoben Gruppen (Beispiele 1 bis 3).

### Anwendungstechnische Prüfung:

### Testung der Lösung aus Beispiel 1 als Faserbindemittel:

Ein Zellwoll-Tissue wurde mittels Foulard mit der Lösung aus Beispiel 1 getränkt, abgequetscht und anschließend 3 Minuten bei 150°C getrocknet (Bindemittelauftrag 29.5 %). Die Festigkeit des so imprägnierten Vlieses wurde in Querrichtung geprüft. Die Prüfungen wurden mit dem trockenen Vlies sowie nach je einer Minute Lagerung in Wasser bzw. Isopropanol durchgeführt. Dazu wurden jeweils 3 Vliesstreifen von 150 mm Länge und 15 mm Breite übereinandergelegt und gemeinsam geprüft. Die Meßbedingungen waren wie folgt: Einspannlänge 100 mm, Einspannbreite 15 mm, Meßgeschwindigkeit 100 mm/min. Als Meßwert wurde die Höchstzugkraft dokumentiert, das heißt die höchste im Rahmen der Messung erreichte Zugkraft. Die Meßergebnisse sind in Tabelle 1 zusammengefaßt:

**Tabelle 1:**

| | Trocken | H₂O-Lagerung | Isopropanol-Lagerung |
|---|---|---|---|
| Höchstzugkraft [N] | 24.7 | 4.8 | 23.8 |

Bemerkenswert ist, daß die Festigkeit nach Isopropanol-Lagerung annähernd der Festigkeit des trockenen Vlieses entspricht.

Testung der Lösung aus Beispiel 1 zur Antistatik-Ausrüstung von Teppichen:

Ein mit 30 % Bindemittel auf der Rückseite ausgerüsteter Nadelfilz wurde mit 0.2 % bzw. 0.5 %, bezogen auf Bindemittelmenge, der Lösung aus Beispiel 1 besprüht und 3 Minuten bei 150°C getrocknet. Von dem so ausgerüsteten Teppich wurde die Halbwertszeit der elektrostatischen Entladung nach DIN VDE 0303 Teil 8 bei unterschiedlicher relativer Luftfeuchtigkeit (10 %, 30 %, 50 %) geprüft. Die angelegte Spannung betrug 10 kV, die Meßtemperatur 27°C. Die Meßergebnisse sind in Tabelle 2 zusammengefaßt:

**Tabelle 2:**

| | Luftfeuchte | 10 % | 30 % | 50 % |
|---|---|---|---|---|
| | | | | |
| Nadelfilz | | > 30 min | 1.5 min | 9 s |
| | | | | |
| Nadelfilz + 0.2 % Lsg. | | > 30 min | 12 s | 8 s |
| | | | | |
| Nadelfilz + 0.5 % Lsg. | | 15 min | 9 s | 1 s |

Der antistatische Effekt des erfindungsgemäßen Polymers bewirkte eine deutliche Verringerung der Halbwertszeit der elektrostatischen Entladung.

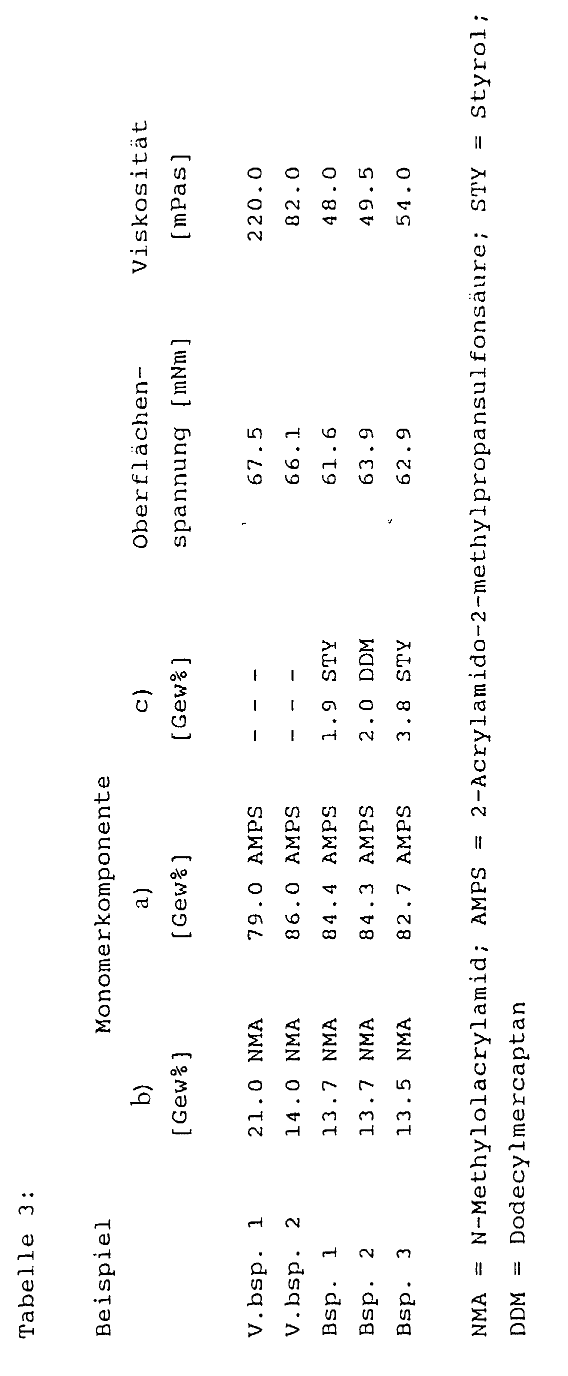

## Patentansprüche

1. Wasserlösliche, vernetzbare Copolymerisate mit einem mittleren Molekulargewicht von ≤ 500000 enthaltend
a) 20 bis 95 Gew% Sulfonsäure- oder Sulfonatgruppenhaltige Monomereinheiten,
b) 4 bis 80 Gew% N-Methylol- oder N-Alkoxymethylgruppenhaltige Monomereinheiten,
c) 0.1 bis 20 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind, und
wobei der Anteil an Sulfonsäure-/Sulfonatgruppenhaltigen Monomereinheiten gegebenenfalls zu bis zu 50 Gew%, bezogen auf den Gewichtsanteil der Monomereinheiten a), durch Carboxylgruppenhaltige Monomereinheiten d) oder Amidgruppenhaltige Monomereinheiten e) substituiert werden kann.

2. Wasserlösliche, vernetzbare Copolymerisate mit einem mittleren Molekulargewicht von ≤ 500000 enthaltend
a) 30 bis 87 Gew% Sulfonsäure- oder Sulfonatgruppenhaltige Monomereinheiten,
b) 12 bis 60 Gew% N-Methylol- oder N-Alkoxymethylgruppenhaltige Monomereinheiten,
c) 1 bis 10 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind.

3. Copolymerisate nach Anspruch 1 oder 2, dadurch gekennzeichnet, daß als Monomereinheiten a) ein oder mehrere aus der Gruppe umfassend 2-Acrylamido-2-methylpropansulfonsäure (AMPS), Styrolsulfonsäure, Acrylsäuresulfopropylester, Itaconsäuresulfopropylester, Vinylsulfonsäure, und deren Ammonium-, Natrium-, Kalium- und Calciumsalze enthalten sind.

4. Copolymerisate nach Anspruch 1 bis 3, dadurch gekennzeichnet, daß als Monomereinheiten b) N-Methylolacrylamid und/oder N-(Isobutoxymethyl)-acrylamid enthalten sind.

5. Copolymerisate nach Anspruch 1 bis 4, dadurch gekennzeichnet, daß als Monomereinheiten c) ein oder mehrere aus der Gruppe umfassend Ester der Acrylsäure oder Methacrylsäure wie Methylmethacrylat mit mehr als 3 C-Atomen, Vinylaromaten wie Styrol oder Vinyltoluol, Olefine wie Ethylen oder Propylen, Vinylhalogenide wie Vinylchlorid, Vinylester von aliphatischen Carbonsäuren mit mehr als 2 C-Atomen, sowie hydrophobe Endgruppen von Initiatorresten oder Reglermolekülen mit jeweils mehr als 8 C-Atomen, enthalten sind.

6. Verfahren zur Herstellung von Copolymerisaten gemäß Anspruch 1 bis 5, dadurch gekennzeichnet, daß die Herstellung durch radikalische Polymerisation der Monomeren a), b), c), gegebenenfalls d) und e), in wäßriger Lösung bei einer Reaktionstemperatur von 40°C bis 80°C, mittels Initiierung mit wasserlöslichem Radikalbildner erfolgt.

7. Verfahren gemäß Anspruch 6, dadurch gekennzeichnet, daß ein Teil des Gemisches der Comonomeren a), b), c), und gegebenenfalls d) und e) als wäßrige Lösung vorgelegt und die Restmenge der Comonomere a) und b) zudosiert wird, und die Vorlage auf Reaktionstemperatur erwärmt wird, und nach Erreichen der Polymerisationstemperatur der Radikalstarter und das restliche Comonomergemisch, jeweils in wäßriger Lösung, langsam zudosiert wird.

8. Verfahren gemäß Anspruch 7, dadurch gekennzeichnet, daß 5 bis 60 Gew% Comonomere a), sowie 5 bis 60 Gew% Comonomere b), als wäßrige Lösung vorgelegt und die Restmenge der Comonomere a) und b) zudosiert wird.

9. Verwendung der Copolymerisate gemäß Anspruch 1 bis 5, als Bindemittel oder Rheologiehilfsmittel für Beschichtungsmittel im Textil-, Papier- und Baubereich und für Klebemittel im Textil-, Papier- und Baubereich.

10. Verwendung der Copolymerisate gemäß Anspruch 1 bis 5, zur antistatischen Ausrüstung von Textilien.

11. Verwendung der Copolymerisate gemäß Anspruch 1 bis 5, als Schutzkolloid zur Stabilisierung von wäßrigen Polymerdispersionen oder wäßrigen Polymeremulsionen.

12. Verwendung gemäß Anspruch 9 bis 11, dadurch gekennzeichnet, daß die Copolymerisate in Form deren wäßrigen Lösungen eingesetzt werden.

13. Verwendung der Copolymerisate gemäß Anspruch 1 bis 5 als Verdüsungshilfe bei der Sprühtrocknung von Polymerdispersionen.

## Revendications

1. Copolymères hydrosolubles réticulables ayant un poids moléculaire moyen ≤ 500000, comprenant
a) de 20 à 95% en poids de motifs monomères renfermant des groupes acide sulfonique ou sulfonate,
b) de 4 à 80% en poids de motifs monomères renfermant des groupes N-méthylol ou N-alcoxyméthyle,
c) de 0,1 à 20% en poids de motifs monomères hydrophobes parmi le groupe constitué de composés non hydrosolubles éthyléniquement insaturés et de groupes terminaux hydrophobes de radicaux d'amorceurs ou de molécules régulatrices,
les proportions en % en poids étant par rapport au poids total du copolymère, et
jusqu'à 50% en poids, par rapport à la proportion pondérale des motifs monomères a), de la proportion de motifs monomères renfermant des groupes acide sulfonique/sulfonate pouvant être remplacés par des motifs monomères d) renfermant des groupes carboxy ou des motifs monomères e) renfermant des groupes amides.

2. Copolymères hydrosolubles réticulables ayant un poids moléculaire moyen ≤ 500000, comprenant
a) de 30 à 87% en poids de motifs monomères renfermant des groupes acide sulfonique ou sulfonate,
b) de 12 à 60% en poids de motifs monomères renfermant des groupes N-méthylol ou N-alcoxyméthyle,
c) de 1 à 10% en poids de motifs monomères hydrophobes parmi le groupe constitué de composés non hydrosolubles éthyléniquement insaturés et de groupes terminaux hydrophobes de radicaux d'amorceurs ou de molécules régulatrices, les proportions en % en poids étant par rapport au poids total du copolymère.

3. Copolymères selon la revendication 1 ou 2, caractérisés en ce qu'ils comprennent, en tant que motifs monomères a), un ou plusieurs motifs parmi le groupe constitué de l'acide 2-acrylamido-2-méthylpropanesulfonique (AMPS), de l'acide styrènesulfonique, de l'acrylate de sulfopropyle, de l'itaconate de sulfopropyle, de l'acide vinylsulfonique et de leurs sels d'ammonium, de sodium, de potassium et de calcium.

4. Copolymères selon les revendications 1 à 3, caractérisés en ce qu'ils comprennent en tant que motifs monomères b), le N-méthylolacrylamide et/ou le N-(isobutoxyméthyl)-acrylamide.

5. Copolymères selon les revendications 1 à 4, caractérisés en ce qu'ils comprennent en tant que motifs monomères c), un ou plusieurs motifs parmi le groupe constitué d'esters de l'acide acrylique ou de l'acide méthacrylique, tels que le méthacrylate de méthyle, ayant plus de 3 atomes de carbone, de vinyles aromatiques tels que le styrène ou le vinyltoluène, d'oléfines telles que l'éthylène ou le propylène, d'halogénures de vinyle tels que le chlorure de vinyle, d'esters vinyliques d'acides carboxyliques aliphatiques ayant plus de 2 atomes de carbone, ainsi que de groupes terminaux hydrophobes de radicaux amorceurs ou de molécules régulatrices ayant dans chaque cas plus de 8 atomes de carbone.

6. Procédé de préparation de copolymères selon les revendications 1 à 5, caractérisé en ce que la préparation est réalisée par polymérisation radicalaire des monomères a), b), c), éventuellement d) et e), en solution aqueuse à une température de réaction de 40°C à 80°C, par amorçage au moyen d'agents hydrosolubles formant des radicaux.

7. Procédé selon la revendication 6, caractérisé en ce qu'une partie du mélange des comonomères a), b), c), et éventuellement d) et e) est introduite initialement sous forme de solution aqueuse et la quantité restante des comonomères a) et b) est ajoutée en quantité mesurée, la charge initiale est chauffée jusqu'à la température de réaction, et après avoir atteint la température de polymérisation, l'amorceur radicalaire et le reste du mélange de comonomères sont ajoutés lentement en quantité mesurée, dans chaque cas en solution aqueuse.

8. Procédé selon la revendication 7, caractérisé en ce que l'on introduit initialement de 5 à 60% en poids de comonomères a) et de 5 à 60% en poids de comonomères b) sous forme de solution aqueuse, et on ajoute la quantité restante des comonomères a) et b) en quantité mesurée.

9. Utilisation des copolymères selon les revendications 1 à 5, en tant que liants ou auxiliaires rhéologiques pour des compositions de revêtements dans les secteurs du textile, du papier et de la construction, et pour des adhésifs dans les secteurs du textile, du papier et de la construction.

10. Utilisation des copolymères selon les revendications 1 à 5, pour l'apprêtage antistatique de textiles.

11. Utilisation des copolymères selon les revendications 1 à 5, en tant que colloïde protecteur pour la stabilisation de dispersions polymères aqueuses ou d'émulsions polymères aqueuses.

12. Utilisation selon les revendications 9 à 11, caractérisée en ce que les copolymères sont utilisés sous forme de solutions aqueuses.

13. Utilisation des copolymères selon les revendications 1 à 5, en tant qu'auxiliaires d'atomisation durant le séchage par pulvérisation de dispersions polymères.

## Claims

1. Water-soluble, crosslinkable copolymers having an average molecular weight of ≤ 500,000, comprising
a) 20 to 95% by weight of monomer units containing sulphonic acid or sulphonate groups,
b) 4 to 80% by weight of monomer units containing N-methylol or N-alkoxymethyl groups and
c) 0.1 to 20% by weight of hydrophobic monomer units from the group consisting of water-insoluble, ethylenically unsaturated compounds and the hydrophobic end groups of initiator radicals or regulator molecules,
the contents in % by weight being based on the total weight of the copolymer, and
it being possible, where appropriate, for up to 50% by weight, based on the weight content of monomer units a), of the content of monomer units containing sulphonic acid/sulphonate groups to be replaced by monomer units d) containing carboxyl groups or monomer units e) containing amide groups.

2. Water-soluble, crosslinkable copolymers having an average molecular weight of ≤ 500,000 comprising
a) 30 to 87% by weight of monomer units containing sulphonic acid or sulphonate groups,
b) 12 to 60% by weight of monomer units containing N-methylol or N-alkoxymethyl groups and
c) 1 to 10% by weight of hydrophobic monomer units from the group consisting of water-insoluble, ethylenically unsaturated compounds and the hydrophobic end groups of initiator radicals or regulator molecules,
the contents in % by weight being based on the total weight of the copolymer.

3. Copolymers according to Claim 1 or 2, characterized in that they comprise, as monomer units a), one or more units from the group consisting of 2-acrylamido-2-methylpropanesulphonic acid (AMPS), styrenesulphonic acid, sulphopropyl acrylate, sulphopropyl itaconate and vinylsulphonic acid and ammonium, sodium, potassium and calcium salts thereof.

4. Copolymers according to Claims 1 to 3, characterized in that they comprise, as monomer units b), N-methylolacrylamide and/or N-(isobutoxymethyl)-acrylamide.

5. Copolymers according to Claims 1 to 4, characterized in that they comprise, as monomer units c), one or more units from the group consisting of esters of acrylic acid or methacrylic acid having more than 3 C atoms, such as methyl methacrylate, vinylaromatics, such as styrene or vinyltoluene, olefins, such as ethylene or propylene, vinyl halides, such as vinyl chloride, vinyl esters of aliphatic carboxylic acids having more than 2 C atoms and hydrophobic end groups of initiator radicals or regulator molecules having in each case more than 8 C atoms.

6. Process for the preparation of copolymers according to Claims 1 to 5, characterized in that the preparation is carried out by free radical polymerization of monomers a), h), c) and, if appropriate, d) and e) in aqueous solution at a reaction temperature of 40°C to 80°C by means of initiation with water-soluble agent which forms free radicals.

7. Process according to Claim 6, characterized in that a portion of the mixture of comonomers a), b), c) and, if appropriate, d) and e) are initially introduced into the reaction vessel as an aqueous solution and the remaining amount of comonomers a) and b) is metered in, and the initial mixture is heated to the reaction temperature, and, when the polymerization temperature has been reached, the free radical initiator and the remainder of the comonomer mixture are slowly metered in, in each case in aqueous solution.

8. Process according to Claim 7, characterized in that 5 to 60% by weight of comonomer a), and 5 to 60% by weight of comonomer b), are initially introduced into the reaction vessel as aqueous solution and the remaining amount of comonomers a) and b) is metered in.

9. Use of the copolymers according to Claims 1 to 5, as binders or rheology auxiliaries for coating compositions in the textile, paper and building sector and for adhesives in the textile, paper and building sector.

10. Use of the copolymers according to Claims 1 to 5, for antistatic treatment of textiles.

11. Use of the copolymers according to Claims 1 to 5, as a protective colloid for stabilizing aqueous polymer dispersions or aqueous polymer emulsions.

12. Use according to Claim 9 to 11, characterized in that the copolymers are used in the form of the aqueous solutions thereof.

13. Use of the copolymers according to Claims 1 to 5 as a spraying aid during spray drying of polymer dispersions.
